# EUROPEAN PATENT APPLICATION

(11) **EP 3 163 052 A1**
(43) Date of publication of application: **03.05.2017**
(21) Application number: 16194768.4
(22) Date of filing: 20.10.2016
(51) Int. Cl.: F02C 7/12, F02C 7/18

(54) **METHOD AND SYSTEM FOR MANAGING HEAT FLOW IN AN ENGINE**

(30) Priority: 26.10.2015 US 201514922852
(71) Applicant: General Electric Company, Schenectady, NY 12345 (US)
(72) Inventor: MILLER, Brandon Wayne, Cincinnati, OH Ohio 45215 (US); CERNY, Matthew Robert, Cincinnati, OH Ohio 45215 (US)
(74) Representative: Williams, Andrew Richard

(57) **Abstract**

An engine cooled cooling air (CCA) heat exchanger system 200 includes a thermal bus intermediate loop heat exchanger 280 positioned external to a casing 116 of a core engine 112 and configured to provide a heat sink for a plurality of engine auxiliary systems 410, as well as at least one CCA heat exchanger 220, 240, 260 positioned inside of the core engine casing 116 and coupled in flow communication with the thermal bus intermediate loop 280.

## Description

### BACKGROUND

This description relates to gas turbine engines, and, more particularly, to a cooled cooling air heat exchanger system for managing heat flow in gas turbine engines.

At least some known gas turbine engines include a forward fan, a core engine, and a power turbine. The core engine includes at least one compressor that provides pressurized air to a combustor wherein the air is mixed with fuel and ignited for use in generating hot combustion gases. Generated combustion gases flow downstream to one or more turbines that extract energy from the gas to power the compressor and provide useful work, such as powering an aircraft. A turbine section may include a stationary turbine nozzle positioned at the outlet of the combustor for channeling combustion gases into a turbine rotor downstream thereof.

Thermal management in gas turbine engines is important in extending the lifetime of engine components. At least some known thermal management systems include a plurality of heat exchangers configured to transfer heat to and from various engine auxiliary systems. When a heat exchanger or thermal sink reaches its thermal management capacity, an additional heat exchanger or thermal management component may be added to an existing system. Accordingly, at least some known heat management systems are a non-standard amalgam of a plurality of disparate components disposed about the core engine casing, which can contribute weight and complexity to the engine system, in addition to taking up valuable space. Moreover, some heat management systems channel fuel as a coolant through the core engine casing.

### BRIEF DESCRIPTION

In one aspect, an engine cooled cooling air (CCA) heat exchanger system is provided. The CCA heat exchanger system includes a thermal bus intermediate loop heat exchanger positioned external to a casing of a core engine and configured to provide a heat sink for a plurality of engine auxiliary systems, and a CCA heat exchanger positioned inside of the core engine casing and coupled in flow communication with said thermal bus intermediate loop.

In another aspect, a method of managing heat flow in an engine is provided. The method includes positioning a cooled cooling air (CCA) heat exchanger inside of a casing of a core engine, and channeling cooled cooling air through the CCA heat exchanger to a thermal bus intermediate loop heat exchanger positioned external to the core engine casing.

In yet another aspect, a gas turbine engine system is provided, the gas turbine engine system including a core engine including a combustor, and a cooled cooling air (CCA) heat exchanger system. The CCA heat exchanger system includes a thermal bus intermediate loop heat exchanger positioned external to a casing of the core engine and configured to provide a heat sink for a plurality of engine auxiliary systems, and a CCA heat exchanger positioned inside of the core engine casing and coupled in flow communication with said thermal bus intermediate loop.

### DRAWINGS

These and other features, aspects, and advantages of the present disclosure will become better understood when the following detailed description is read with reference to the accompanying drawings in which like characters represent like parts throughout the drawings, wherein:
FIG. 1 is a cross-sectional view of an exemplary turbine engine assembly;
FIG. 2 is an enlarged cross-sectional view of a portion the engine assembly shown in

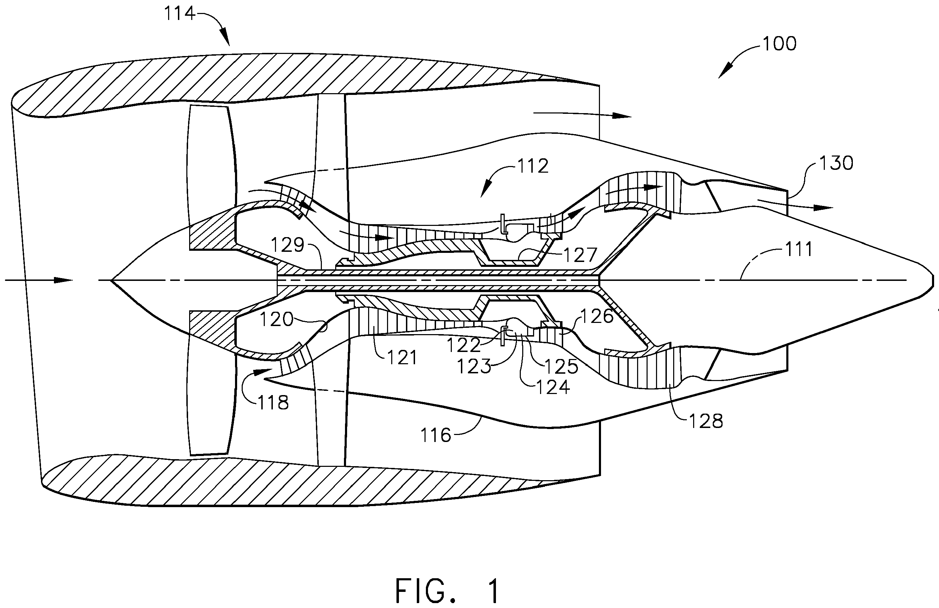

FIG. 1 including an exemplary cooled cooling air (CCA) heat exchanger system;

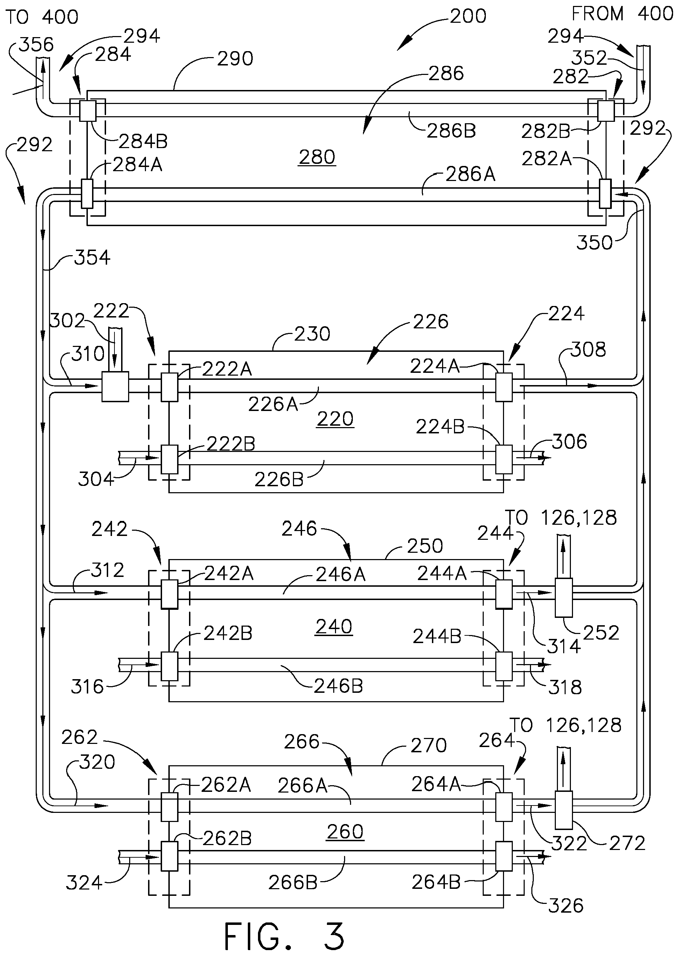

FIG. 3 is a schematic block diagram illustrating flow communication between elements of the CCA heat exchanger system shown in FIG. 1;

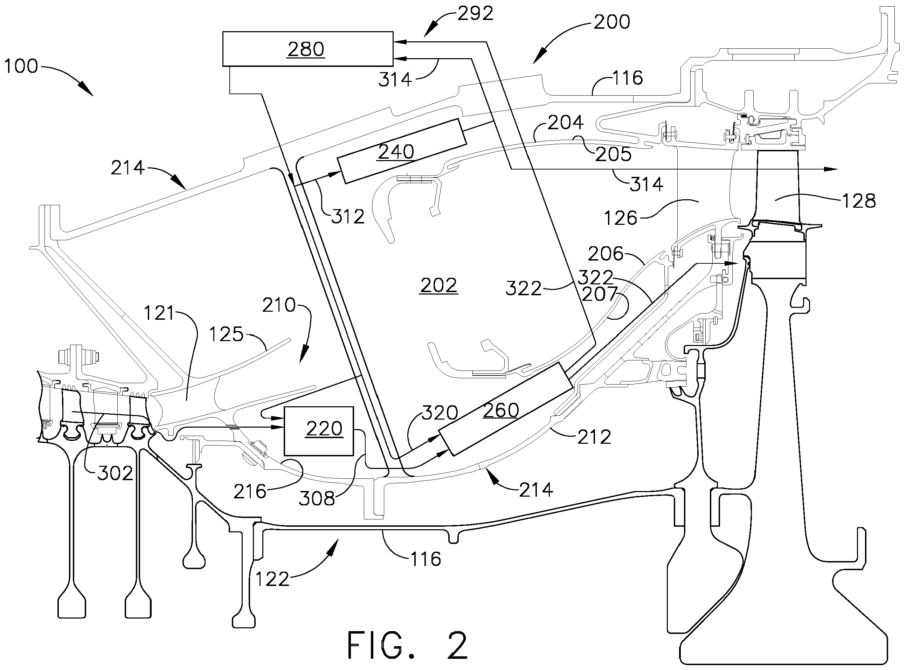

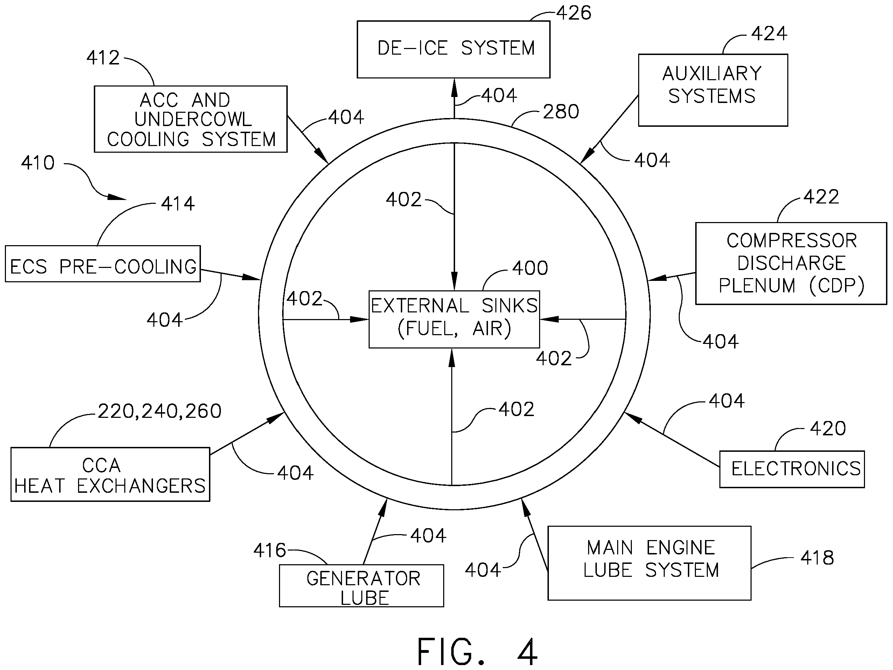

FIG. 4 is a block diagram illustrating the flow of heat between components of CCA heat exchanger system shown in FIGS. 2 and 3 and an external heat sink.

Although specific features of various embodiments may be shown in some drawings and not in others, this is for convenience only. Any feature of any drawing may be referenced and/or claimed in combination with any feature of any other drawing.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

Embodiments of the present disclosure relate to heat exchanger systems. More specifically, the cooled cooling air (CCA) heat exchanger systems described herein include at least one CCA heat exchanger positioned in a relatively hot location within a core engine casing and a thermal bus intermediate loop heat exchanger configured to channel heat from the at least one CCA heat exchanger to an ultimate heat sink. As used herein, "relatively hot location" refers to a functionally optimal location for a heat exchanger based on the element(s) that a heat exchanger is cooling. For example, a "relatively hot" location may refer to a location proximate an upstream flow of a gas that may be cooled by the heat exchanger before being channeled, in a cooled state, downstream. As another example, a "relatively hot" location may refer to a location proximate a hot component that may benefit from cooling from the heat exchanger. The CCA heat exchanger system is configured to centralize and standardize heat exchange systems in a turbine engine, facilitating reducing complexity and an amount of valuable space taken up by disparate heat exchange components.

The following description refers to the accompanying drawings, in which, in the absence of a contrary representation, the same numbers in different drawings represent similar elements.

FIG. 1 shows a cross-sectional view of an exemplary turbine engine assembly 100 having a longitudinal or centerline axis 111 therethrough. Although FIG. 1 shows a turbine engine assembly for use in an aircraft, engine assembly 100 is any turbine engine that facilitates operation as described herein, such as, but not limited to, a ground-based gas turbine engine assembly. Engine assembly 100 includes a core turbine engine 112 and a fan section 114 positioned upstream of core turbine engine 112. Core engine 112 includes a generally tubular outer casing 116 that defines an annular inlet 118. Outer casing 116 further encloses and supports a booster compressor 120 for raising the pressure of air entering core engine 112. A high pressure, multistage, axial-flow high pressure compressor 121 receives pressurized air from booster compressor 120 and further increases the pressure of the air. The pressurized air flows to a combustor 122, generally defined by a combustion liner 123, and including a mixer assembly 124, where fuel is injected into the pressurized air stream, via one or more fuel nozzles 125 to raise the temperature and energy level of the pressurized air. The high energy combustion products flow from combustor 122 to a first (high pressure) turbine 126 for driving high pressure compressor 121 through a first (high pressure) drive shaft 127, and then to a second (low pressure) turbine 128 for driving booster compressor 120 and fan section 114 through a second (low pressure) drive shaft 129 that is coaxial with first drive shaft 127. After driving each of turbines 126 and 128, the combustion products leave core engine 112 through an exhaust nozzle 130 to provide propulsive jet thrust.

FIGS. 2 and 3 illustrate an example embodiment of a cooled cooling air (CCA) heat exchanger system 200. More specifically, FIG. 2 is an enlarged cross-sectional view of a portion of turbine engine assembly 100 (shown in FIG. 1) including CCA heat exchanger system 200, and FIG. 3 is a schematic block diagram illustrating flow communication between elements of CCA heat exchanger system 200. CCA heat exchanger system 200, in the exemplary embodiment, is at least partially disposed about combustor 122 of engine assembly 100.

Combustor 122 defines a combustor chamber 202 in which combustor air is mixed with fuel and combusted. Combustor 122 includes an outer liner 204 having an outer surface 205 and an inner liner 206 having an outer surface 207, outer liner 204 and inner liner 206 defining a boundary of combustion chamber 202. Combustor 122 further includes a compressor discharge nozzle (CDN) module 210 including fuel nozzle 125. Engine assembly 100 further includes a nozzle support casing 212 interior of core engine casing 116, nozzle support casing having an inner surface 216. Core engine casing 116 and nozzle support casing 212 define an outer surface 214 of combustor 122.

CCA heat exchanger system 200 includes one or more CCA heat exchangers 220, 240, and/or 260 positioned in relatively hot location(s) about combustor 122. CCA heat exchanger system 200 also includes a thermal bus intermediate heat exchange loop ("thermal bus loop") 280.

First CCA heat exchanger 220 includes an inlet 222, an outlet 224, and at least one flow path 226 therebetween. In one embodiment, inlet 222 includes a cooling fluid inlet 222A and a working fluid inlet 222B, outlet 224 includes a cooling fluid outlet 224A and a working fluid outlet 224B, and flow path 226 includes a cooling fluid flow path 226A and a working fluid flow path 226B proximate cooling fluid flow path 226A. Working fluid flow path 226B extends between working fluid inlet 222B and working fluid outlet 224B, and is configured to channel a working fluid therethrough. Cooling fluid flow path 226A extends between cooling fluid inlet 222A and cooling fluid outlet 224A and is configured to channel cooled cooling air therethrough, to transfer a thermal load from working fluid in working fluid flow path 226B. In other embodiments, inlet 222 includes only cooling fluid inlet 222A, outlet 224 includes only cooling fluid outlet 224A, and flow path 226 includes only cooling fluid flow path 226A proximate an outer surface 230 of first CCA heat exchanger 220, such that flow path 226 is configured to transfer a thermal load from a vicinity of first CCA heat exchanger 220 to cooling fluid flow path 226A. First CCA heat exchanger 220 is arranged in a space inside engine casing 116 and proximate CDN module 210. First CCA heat exchanger 220 is coupled to engine assembly 100 radially inward from nozzle 125. For example, first CCA heat exchanger 220 may be coupled to inner surface 216 of nozzle support casing 212. First CCA heat exchanger 220 (and/or second or third CCA heat exchangers 240, 260 or an additional CCA heat exchanger, not shown) may alternatively be positioned in a casing of high-pressure compressor 121.

Second CCA heat exchanger 240 includes an inlet 242, an outlet 244, and at least one flow path 246 therebetween. In one embodiment, inlet 242 includes a cooling fluid inlet 242A and a working fluid inlet 242B, outlet 244 includes a cooling fluid outlet 244A and a working fluid outlet 244B, and flow path 246 includes a cooling fluid flow path 246A and a working fluid flow path 246B proximate cooling fluid flow path 246A. Working fluid flow path 246B extends between working fluid inlet 242B and working fluid outlet 244B, and is configured to channel a working fluid therethrough. Cooling fluid flow path 246A extends between cooling fluid inlet 242A and cooling fluid outlet 244A and is configured to channel cooled cooling air therethrough, to transfer a thermal load from working fluid in working fluid flow path 246B. In other embodiments, inlet 242 includes only cooling fluid inlet 242A, outlet 244 includes only cooling fluid outlet 244A, and flow path 246 includes only cooling fluid flow path 246A proximate an outer surface 250 of second CCA heat exchanger 240, such that flow path 246 is configured to transfer a thermal load from a vicinity of second CCA heat exchanger 240 to cooled cooling air therein. Second CCA heat exchanger 240 is positioned in a relatively hot location proximate outer surface 214 of combustor 122. More particularly, in the example embodiment, second CCA heat exchanger 240 is integrated in a space between core engine casing 116 and outer surface 205 of outer liner 204. Second CCA heat exchanger 240 may be coupled to core engine casing 116, outer liner 204, and/or an alternate support structure (not shown). Alternatively, second CCA heat exchanger 240 (and/or third CCA heat exchanger 260, or another CCA heat exchanger, not shown) may be positioned in a casing of high-pressure turbine 126.

Third CCA heat exchanger 260 includes an inlet 262, an outlet 264, and at least one flow path 266 therebetween. In one embodiment, inlet 262 includes a cooling fluid inlet 262A and a working fluid inlet 262B, outlet 264 includes a cooling fluid outlet 264A and a working fluid outlet 264B, and flow path 266 includes a cooling fluid flow path 266A and a working fluid flow path 266B proximate cooling fluid flow path 266A. Working fluid flow path 266B extends between working fluid inlet 262B and working fluid outlet 264B, and is configured to channel a working fluid therethrough. Cooling fluid flow path 266A extends between cooling fluid inlet 262A and cooling fluid outlet 264A and is configured to channel cooled cooling air therethrough, to transfer a thermal load from working fluid in working fluid flow path 266B. In other embodiments, inlet 262 includes only cooling fluid inlet 262A, outlet 264 includes only cooling fluid outlet 264A, and flow path 266 includes only cooling fluid flow path 266A proximate an outer surface 270 of third CCA heat exchanger 260, such that flow path 266 is configured to transfer a thermal load from a vicinity of third CCA heat exchanger 260 to cooled cooling air therein. Third CCA heat exchanger 260 is positioned in a relatively hot location proximate outer surface 214 of combustor 122. More particularly, in the example embodiment, third CCA heat exchanger 260 is integrated in a space between nozzle support case 212 and outer surface 207 of inner liner 206. Third CCA heat exchanger 260 may be coupled to nozzle support case 212, inner liner 206, core engine casing 116, and/or an alternative support structure (not shown).

Thermal bus loop 280 is positioned external to core engine casing 116 in proximity to an external heat sink 400 (shown in FIG. 4), such as, for example, ambient air and/or ram air. Thermal bus loop 280 is configured to provide thermal transfer for a plurality of engine auxiliary systems, including one or more of CCA heat exchangers 220, 240, and/or 260. Thermal bus loop 280 includes an inlet 282, an outlet 284, and a flow path 286 defined therebetween. In the example embodiment, inlet 282 includes an "internal cooling fluid inlet" 282A and an "external cooling fluid inlet" 282B, outlet 284 includes an "internal cooling fluid outlet" 284A and an "external cooling fluid outlet" 284B, and flow path 286 includes an "internal cooling fluid flow path" 286A and an "external cooling fluid flow path" 286B proximate to internal cooling fluid flow path 286A to permit thermal transfer therebetween. CCA heat exchanger system 200 includes an "internal conduit system" 292, which is in flow communication with the above-described "internal" components of thermal bus loop 280 and is configured to channel air (and/or any other suitable cooling fluid) as a cooling fluid between thermal bus loop 280 and one or more of CCA heat exchangers 220, 240, and/or 260. Accordingly, by channeling air within internal conduit system 292, hot, high pressure air need not be taken outside CCA heat exchanger system 200 (i.e., need not be taken outside of core engine 112) for cooling, facilitating reducing pressure losses. CCA heat exchanger system 200 may further include an "external conduit system" 294, which is in flow communication with the above-described "external" components and is configured to channel a cooling fluid, which may include fuel, air, or any other suitable cooling fluid, between thermal bus loop 280 and external heat sink 400.

In an alternative embodiment, thermal bus loop 280 only includes internal conduit system 292 (i.e., does not include additional, external conduit system 294), and internal conduit system 292 is in direct thermal communication with external heat sink 400, for example, through at least a portion of an outer surface 290 of internal conduit system 292 of thermal bus loop 280, thereby reducing or eliminating the need for additional piping or valving to transfer thermal loads between external heat sink 400 and cooling fluid channeled within internal conduit system 292. Internal conduit system 292 may further include an auxiliary inlet (not shown) configured to receive cooling fluid from a plurality of engine auxiliary systems 410 (shown in FIG. 4). It should be understood that the discussion herein with respect to the flow communication between elements of CCA heat exchanger system 200 may be readily applied to this alternative embodiment of thermal bus loop 290.

In one embodiment, during operation, cooling fluid inlet 222A of first CCA heat exchanger 220 is configured to receive bleed or leakage air 302 (also referred to as "cooling fluid 302") from one or more compressor stages of compressor 121 (shown in FIG. 1). Accordingly, cooling fluid inlet 222A may be couplable to one or more compressor stage(s) using suitable conduits, including, for example, pipes, tubes, valves, and/or gates. Cooling fluid flow path 226A is configured to channel bleed air 302 therethrough to cooling fluid outlet 224A. First CCA heat exchanger 220 is configured to transfer a heat load from CDN module 210 (e.g., from nozzle 125) and/or from a rotor and/or stator of high-pressure compressor 121 to bleed air 302 in cooling fluid flow path 226A, thereby facilitating reducing the temperature of CDN module 210 and increasing the temperature of bleed air 302. In some embodiments, bleed air 302 may maintain suitable pressure and be reintroduced into core engine 112 at a downstream location from CCA heat exchanger 220, for example, at a location inside core engine case 116, or at one or more of turbines 126, 128 (e.g., turbine center frame purge, turbine rear frame purge, low-pressure turbine 126 rotor purge, etc.).

In one embodiment, first CCA heat exchanger 220 is configured to channel relatively hot air 304 from a vicinity of CDN module 210 into working fluid inlet 222B, through working fluid flow path 226B. Thermal transfer between working fluid flow path 226B and cooling fluid flow path 226A facilitates reducing a temperature of hot air 304, such that relatively cooler air 306 is output from working fluid outlet 224B to facilitate cooling CDN module 210. Relatively warmer bleed air 308 is output from cooling fluid outlet 224A. Cooling fluid outlet 224A is in flow communication with internal cooling fluid inlet 282A of thermal bus loop 280 through internal conduit system 292. Internal conduit system 292 is configured to channel heated bleed air 308 output from cooling fluid outlet 224A of first CCA heat exchanger 220 to at least one of thermal bus loop 280, second CCA heat exchanger 240, and third CCA heat exchanger 260. Alternatively or additionally, cooling fluid flow path 226A is arranged proximate outer surface 230 of first CCA heat exchanger 220, such that thermal transfer between the vicinity of CDN module 210 occurs across outer surface 230 of first CCA heat exchanger 220. Cooling fluid (e.g., cooling fluid 302) channeled through cooling fluid flow path 226A transfers a heat load from first CCA heat exchanger 220 into the cooling fluid.

Additionally or alternatively, cooling fluid inlet 222A of first CCA heat exchanger 220 is in flow communication with internal cooling fluid outlet 284A of thermal bus loop 280 through internal conduit system 292. Cooling fluid inlet 222A is configured to receive cooled cooling air 310 from internal cooling fluid outlet 284A of thermal bus loop 280. Cooling fluid flow path 226A is configured to channel cooled cooling air 310 therethrough. Cooled cooling air 310 in cooling fluid flow path 226A is configured to transfer a heat load from CDN module 210 and/or from a final stage of high-pressure compressor 121 to cooling air 310, thereby facilitating reducing the temperature of CDN module 210 and increasing the temperature of cooling air 310. Relatively warmer cooling air 308 is output from cooling fluid outlet 224A. Cooling fluid outlet 224A is in flow communication with internal cooling fluid inlet 282A of thermal bus loop 280 through internal conduit system 292.

In the example embodiment, cooling fluid inlet 242B of second CCA heat exchanger 240 is in flow communication with internal cooling fluid outlet 284A of thermal bus loop 280 through internal conduit system 292. During operation, cooling fluid inlet 242A is configured to receive cooled cooling air 312 from internal cooling fluid outlet 284A of thermal bus loop 280. Cooling fluid flow path 246A is configured to channel cooled cooling air 312 therethrough. Cooled cooling air 312 in cooling fluid flow path 246A is configured to transfer a heat load from outer liner 204 of combustor chamber 202, thereby facilitating reducing a temperature in a vicinity of outer liner 204 and increasing the temperature of cooling air 312. Relatively warmer cooling air 314 is output from cooling fluid outlet 244A. Cooling fluid outlet 244A is in flow communication with internal cooling fluid inlet 282A of thermal bus loop 280 through internal conduit system 292. Internal conduit system 292 is configured to channel heated cooling air 314 output from cooling fluid outlet 244A of second CCA heat exchanger 240 to at least one of thermal bus loop 280 for cooling and/or at least one of turbine(s) 126, 128 to cool the blades of the at least one of turbines(s) 126, 128. In one embodiment, internal conduit system 292 proximate cooling fluid outlet 244A of second CCA heat exchanger 240 includes one or more valves 252 configured to channel at least a portion of heated cooling air 314 from second CCA heat exchanger 240 to at least one of turbines(s) 126, 128 and bleed or channel the remainder of heated air 314 from second CCA heat exchanger 240 to thermal bus loop 280.

In one embodiment, second CCA heat exchanger 240 is configured to channel relatively hot air 316 from the vicinity of outer liner 204 into working fluid inlet 242B, through working fluid flow path 246B. Thermal transfer between working fluid flow path 246B and cooling fluid flow path 246A facilitates reducing a temperature of hot air 316, such that relatively cooler air 318 is output from working fluid outlet 244B to facilitate cooling outer liner 204. Alternatively or additionally, cooling fluid flow path 246A is arranged proximate outer surface 250 of second CCA heat exchanger 240, such that thermal transfer between the vicinity of outer liner 204 and cooling fluid 312 occurs across outer surface 250 of second CCA heat exchanger 240. Cooled cooling air 312 channeled through cooling fluid flow path 246A transfers a heat load from second CCA heat exchanger 240 into cooled cooling air 312.

In the example embodiment, cooling fluid inlet 262A of third CCA heat exchanger 260 is in flow communication with internal cooling fluid outlet 284A of thermal bus loop 280 through internal conduit system 292. During operation, cooling fluid inlet 262A is configured to receive cooled cooling air 320 from thermal bus loop 280. Cooling fluid flow path 266A is configured to channel cooled cooling air 320 therethrough. Cooled cooling air 320 in cooling fluid flow path 266A is configured to transfer a heat load from inner liner 206 of combustor chamber 202, thereby facilitating reducing a temperature in a vicinity of inner liner 206 and increasing a temperature of cooling air 320. Relatively warmer cooling air 322 is output from cooling fluid outlet 264A. Cooling fluid outlet 264A is in flow communication with internal cooling fluid inlet 282A of thermal bus loop 280 through internal conduit system 292. Internal conduit system 292 is configured to channel heated cooling air 322 output from cooling fluid outlet 264A of third CCA heat exchanger 260 to at least one of thermal bus loop 280 for cooling and/or at least one of turbine(s) 126, 128 to cool the blades of the at least one of turbines(s) 126, 128. In one embodiment, internal conduit system 292 proximate cooling fluid outlet 264A of third CCA heat exchanger 260 includes one or more valves 272 configured to channel at least a portion of heated cooling air 322 from third CCA heat exchanger 260 to at least one of turbines(s) 126, 128 and bleed or channel the remainder of heated air 322 from third CCA heat exchanger 260 to thermal bus loop 280.

In one embodiment, third CCA heat exchanger 260 is configured to channel relatively hot air 324 from the vicinity of inner liner 206 into working fluid inlet 262B, through working fluid flow path 266B. Thermal transfer between working fluid flow path 266B and cooling fluid flow path 266A facilitates reducing a temperature of hot air 324, such that relatively cooler air 326 is output from working fluid outlet 264B to cool inner liner 206. Alternatively or additionally, cooling fluid flow path 266A is arranged proximate outer surface 270 of third CCA heat exchanger 260, such that thermal transfer between the vicinity of inner liner 206 and cooling fluid 320 occurs across outer surface 270 of third CCA heat exchanger 260. Cooled cooling air 320 channeled through cooling fluid flow path 266A transfers a heat load from third CCA heat exchanger 260 into cooled cooling air 320.

During operation, internal cooling fluid inlet 282A of thermal bus loop 280 receives relatively warmer cooling air 308, 314, and/or 322 (collectively "warmer cooling air 350") from internal conduit system 292, i.e., from one or more of first, second, and third CCA heat exchangers 220, 240, 260. In one embodiment, external cooling fluid inlet 282B of thermal bus loop 280 receives a cooling fluid 352 (e.g., fuel, air) through external conduit system 294. In such an embodiment, internal cooling fluid flow path 286A of thermal bus loop 280 is positioned proximate external cooling fluid flow path 286B, such that thermal transfer occurs between internal cooling fluid flow path 286A and external cooling fluid flow path 286B. More specifically, a temperature of warmer cooling air 350 is facilitated being reduced, and a temperature of cooling fluid 352 is increased. Cooled cooling air 354 is output from internal cooling fluid outlet 284A to internal conduit system 292, such that cooled cooling air 354 is channeled to one or more of first, second, and third CCA heat exchangers 220, 240, 260. Relatively warmer cooling fluid 356, having transferred a thermal load from cooling air 350, is output from external cooling fluid outlet 284B to external conduit system 294, such that warmer cooling fluid 356 may encounter external sink 400 for thermal transfer thereto.

In another embodiment, thermal bus loop 280 does not include an external cooling fluid flow path 286B. Internal cooling fluid flow path 286A is positioned proximate outer surface 290 of thermal bus loop 280, wherein at least a portion of outer surface 290 of thermal bus loop is in direct thermal communication with external sink 400. Accordingly, heat transfer from cooling air 350 to external sink 400 occurs from internal cooling fluid flow path 286A across outer surface 290 of thermal bus loop 280.

In the example embodiment, CCA heat exchangers 220, 240, 260 are configured to use air as a cooling fluid, as opposed to fuel. Thermal bus loop 280 is configured to use any suitable cooling fluid, such as air and/or fuel, to cool the cooling air provided to CCA heat exchanger(s) 220, 240, 260. Accordingly, leakage risk associated with using fuel as a cooling fluid proximate combustor chamber 202 is facilitated being reduced, because CCA heat exchanger system 200 only channels fuel external to core engine casing 116 (i.e., only through thermal bus loop 280 and/or external conduit system 294, as opposed to any of CCA heat exchangers 220, 240, 260 and/or internal conduit system 292). If CCA heat exchanger system 200 were to be compromised, core engine 112 would still be able to run.

In some embodiments, core engine casing 116 is radially expanded to accommodate CCA heat exchangers 240 and/or 260. In various embodiments, core engine casing 116 may be radially expanded by any suitable amount to accommodate CCA heat exchangers 240 and/or 260, for example, between 0.5" and 2.0".

FIG. 4 is a block diagram illustrating the flow of heat between components of CCA heat exchanger system 200 (shown in FIGS. 2 and 3) and an external heat sink 400. More specifically, FIG. 4 illustrates a first flow path 402 between thermal bus loop 280 and external, ultimate heat sink 400, located external to core engine casing 116 (shown in FIGS. 1 and 2), and a second flow path 404 between thermal bus loop 280 and a plurality of engine auxiliary systems 410, including CCA heat exchangers 220, 240, 260. First flow path 402 is coupled in heat transfer communication with second flow path 404, which may include internal conduit system 292 (shown in FIGS. 2 and 3). The plurality of engine auxiliary systems 410 includes heat sources such as, for example, ACC and undercowl cooling systems 412, ECS pre-cooling systems 414, generator lube 416, a main engine lube system 418, electronics systems 420, a compressor discharge plenum (CDP) 422, and/or additional auxiliary systems 424 for which thermal bus loop 280 is configured as a heat sink. The plurality of engine auxiliary systems 410 may further include additional heat sinks such as anti-ice or de-ice systems 426 and/or additional auxiliary systems 424.

External heat sink 400 may include fuel, ambient air, ice protection surface heat exchangers, and/or any other suitable heat sink. As described above with respect to FIGS. 2 and 3, external heat sink 400 transfers a thermal load from internal cooling fluid 350, or cooling air 350, in internal cooling fluid flow path 286A of thermal bus loop 280. In turn, thermal bus loop 280 transfers thermal load from the plurality of engine auxiliary systems 410 to cooled cooling fluid 352, thereby facilitating reducing a temperature of auxiliary systems 410 and/or a cooling fluid contained in auxiliary systems 410. Accordingly, thermal bus loop 280 provides a standardized and centralized thermal bus for any number of auxiliary systems 410, providing efficient heat transfer and facilitated being reduced complexity in comparison to existing heat exchanger systems. In one embodiment, thermal bus loop 280 includes active sink selection capability, such that thermal bus loop 280 may optimize use of all available heat sinks 400, 426, 424, thereby facilitating improving redundancy of CCA heat exchanger system 200.

It will be appreciated that the above embodiments that have been described in particular detail are merely example or possible embodiments, and that there are many other combinations, additions, or alternatives that may be included.

The above-described heat exchanger systems provide an efficient method for channeling and transferring heat between engine components, a standard intermediate thermal bus loop, and an ultimate heat sink. Specifically, the above-described bleed system includes one or more cooled cooling air heat exchangers integrated into an engine assembly, within a core engine casing, at relatively hot locations, configured to channel cooling air through the engine. Accordingly, the heat exchanger systems save undercowl space and reduce the complexity of heat exchanger systems with strategically placed CCA heat exchangers channeling heated fluids outside of the engine casing to a standard, central intermediate thermal bus loop, from which heat is transferred to an ultimate, external sink. Moreover, by positioning the CCA heat exchangers as illustrated, locally in relatively hot locations, facilitates shortening or eliminating additional piping or valving in and around these relatively hot locations. Such standardization of heat exchange within the core engine facilitates improving temperature control and temperature management capability of the core engine, which in turn facilitates improving (i.e., reducing) fuel burn in an aircraft. Moreover, the above-described systems improve reliability by eliminating cooling fuel within the core engine casing.

Exemplary embodiments of cooled cooling air heat exchanger systems are described above in detail. The heat exchanger systems, and methods of operating such systems and devices are not limited to the specific embodiments described herein, but rather, components of systems and/or steps of the methods may be utilized independently and separately from other components and/or steps described herein. For example, the methods may also be used in combination with other systems requiring heat exchange, and are not limited to practice with only the systems and methods as described herein. Rather, the exemplary embodiment can be implemented and utilized in connection with many other machinery applications that are currently configured to receive and accept heat exchanger systems.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. An engine cooled cooling air (CCA) heat exchanger system comprising:
   a thermal bus intermediate loop heat exchanger positioned external to a casing of a core engine and configured to provide a heat sink for at least one of a plurality of engine auxiliary systems; and
   a CCA heat exchanger positioned inside of the core engine casing and coupled in flow communication with said thermal bus intermediate loop.
2. The heat exchanger system of clause, wherein the CCA heat exchanger is positioned in a space inside an engine casing compressor discharge nozzle (CDN) module.
3. The heat exchanger system of any preceding clause, wherein the CCA heat exchanger receives cooled cooling air from a stage of a high-pressure compressor upstream of the CDN module.
4. The heat exchanger system of any preceding clause, wherein the CCA heat exchanger is positioned in a space proximate an outer surface of a combustor.
5. The heat exchanger system of any preceding clause, wherein the CCA heat exchanger is positioned in a space proximate an outer surface of at least one of inner and outer liners of the combustor.
6. The heat exchanger system of any preceding clause, wherein the CCA heat exchanger is positioned in at least one of a space between the inner liner of the combustor and a nozzle support case and between the outer liner of the combustor and the core engine casing.
7. The heat exchanger system of any preceding clause, wherein said thermal bus intermediate loop heat exchanger comprises a first flow path coupled in heat transfer communication with a second flow path, said first flow path coupled in flow communication with a heat sink external to the core engine casing, said second flow path coupled in flow communication with at least some of the plurality of engine auxiliary systems.
8. A method of managing heat flow in an engine, said method comprising:
   positioning a cooled cooling air (CCA) heat exchanger inside of a casing of a core engine;
   channeling cooled cooling air through the CCA heat exchanger to a thermal bus intermediate loop heat exchanger positioned external to the core engine casing.
9. The method of any preceding clause, wherein positioning the CCA heat exchanger inside of a casing of a core engine comprises positioning the CCA heat exchanger in a space inside an engine casing compressor discharge nozzle (CDN) module.
10. The method of any preceding clause, further comprising channeling the cooled cooling air from a stage of a high-pressure compressor upstream of the CDN module to the CCA heat exchanger.
11. The method of any preceding clause, wherein positioning the CCA heat exchanger inside of a casing of a core engine comprises positioning the CCA heat exchanger in a space proximate an outer surface of a combustor.
12. The method of any preceding clause, wherein positioning the CCA heat exchanger in a space proximate an outer surface of the combustor comprises positioning the CCA heat exchanger in a space proximate an outer surface of at least one of an inner liner and an outer liner of the combustor.
13. The method of any preceding clause, wherein positioning the CCA heat exchanger in a space proximate an outer surface of the combustor comprises positioning the CCA heat exchanger in at least one of a space between an inner liner of the combustor and a nozzle support case and between an outer liner of the combustor and the core engine casing.
14. The method of any preceding clause, further comprising:
   positioning at least a portion of a first flow path of the thermal bus intermediate loop heat exchanger proximate an outer surface of the thermal bus intermediate loop heat exchanger, wherein the portion of the outer surface is in direct heat transfer with a heat sink external to the core engine casing;
   coupling the first flow path of the thermal bus intermediate loop heat exchanger in heat transfer communication with a second flow path of the thermal bus intermediate loop heat exchanger; and
   coupling the second flow path in flow communication with at least some of the plurality of engine auxiliary systems.
15. A gas turbine engine system comprising:
   a core engine including a combustor; and
   a cooled cooling air (CCA) heat exchanger system comprising:
      a thermal bus intermediate loop heat exchanger positioned external to a casing of the core engine and configured to provide a heat sink for at least one of a plurality of engine auxiliary systems; and
      a CCA heat exchanger positioned inside of the core engine casing and coupled in flow communication with said thermal bus intermediate loop.
16. The system of any preceding clause, wherein the CCA heat exchanger is positioned in a space inside an engine casing compressor discharge nozzle (CDN) module.
17. The system of any preceding clause, wherein the CCA heat exchanger is positioned in a space proximate an outer surface of the combustor.
18. The system of any preceding clause, wherein the CCA heat exchanger is positioned in a space proximate an outer surface of at least one of inner and outer liners of the combustor.
19. The system of any preceding clause, wherein the CCA heat exchanger is positioned in at least one of a space between the inner liner of the combustor and a nozzle support case and between the outer liner of the combustor and the core engine casing.
20. The system of any preceding clause, wherein said thermal bus intermediate loop heat exchanger comprises a first flow path coupled in heat transfer communication with a second flow path, said first flow path coupled in flow communication with a heat sink external to the core engine casing, said second flow path coupled in flow communication with at least some of the plurality of engine auxiliary systems.

## Claims

1. An engine cooled cooling air (CCA) heat exchanger system (200) comprising:
a thermal bus intermediate loop heat exchanger (280) positioned external to a casing (116) of a core engine (112) and configured to provide a heat sink for at least one of a plurality of engine auxiliary systems (410); and
a CCA heat exchanger (220, 240, 260) positioned inside of the core engine casing (116) and coupled in flow communication with said thermal bus intermediate loop (280).

2. The heat exchanger system of claim 1, wherein the CCA heat exchanger (220) is positioned in a space inside an engine casing compressor discharge nozzle (CDN) module (210).

3. The heat exchanger system (200) of claim 1, wherein the CCA heat exchanger (220, 240, 260) is positioned in a space proximate an outer surface (214) of a combustor (122).

4. The heat exchanger system (200) of claim 3, wherein the CCA heat exchanger (240, 260) is positioned in at least one of a space between an outer surface (207) of an inner liner (206) of the combustor (122) and a nozzle support case (212) and between an outer surface (205) of an outer liner (204) of the combustor (122) and the core engine casing (116).

5. The heat exchanger system (200) of any preceding claim, wherein said thermal bus intermediate loop heat exchanger (280) comprises a first flow path (402) coupled in heat transfer communication with a second flow path (404), said first flow path (402) coupled in flow communication with a heat sink (400) external to the core engine casing (116), said second flow path (404) coupled in flow communication with at least some of the plurality of engine auxiliary systems (410).

6. A gas turbine engine system (100) comprising:
a core engine (112) including a combustor (122); and
a cooled cooling air (CCA) heat exchanger system (200) comprising:
a thermal bus intermediate loop heat exchanger (280) positioned external to a casing (116) of the core engine (112) and configured to provide a heat sink for at least one of a plurality of engine auxiliary systems (410); and
a CCA heat exchanger (220, 240, 260) positioned inside of the core engine casing (116) and coupled in flow communication with said thermal bus intermediate loop (280).

7. The system of claim 6, wherein the CCA heat exchanger (220) is positioned in a space inside an engine casing compressor discharge nozzle (CDN) module (210).

8. The system of either of claim 6 or 7, wherein the CCA heat exchanger (220, 240, 260) is positioned in a space proximate an outer surface (214) of the combustor (122).

9. The system of claim 8, wherein the CCA heat exchanger (240, 260) is positioned in at least one of a space between an outer surface (207) of an inner liner (206) of the combustor (122) and a nozzle support case (216) and between an outer surface (205) of an outer liner (204) of the combustor (122) and the core engine casing (116).

10. The system of any preceding claim, wherein said thermal bus intermediate loop heat exchanger (280) comprises a first flow path (402) coupled in heat transfer communication with a second flow path (404), said first flow path (402) coupled in flow communication with a heat sink (400) external to the core engine casing (116), said second flow path (404) coupled in flow communication with at least some of the plurality of engine auxiliary systems (410).

11. A method of managing heat flow in an engine, said method comprising:
positioning a cooled cooling air (CCA) heat exchanger inside of a casing of a core engine;
channeling cooled cooling air through the CCA heat exchanger to a thermal bus intermediate loop heat exchanger positioned external to the core engine casing.

12. The method of claim 11, wherein positioning the CCA heat exchanger inside of a casing of a core engine comprises positioning the CCA heat exchanger in a space inside an engine casing compressor discharge nozzle (CDN) module.

13. The method of claim 12, further comprising channeling the cooled cooling air from a stage of a high-pressure compressor upstream of the CDN module to the CCA heat exchanger.

14. The method of any of claims 11 to 13, wherein positioning the CCA heat exchanger inside of a casing of a core engine comprises positioning the CCA heat exchanger in a space proximate an outer surface of a combustor.

15. The method of claim 14, wherein positioning the CCA heat exchanger in a space proximate an outer surface of the combustor comprises positioning the CCA heat exchanger in a space proximate an outer surface of at least one of an inner liner and an outer liner of the combustor.
